# EUROPÄISCHE PATENTSCHRIFT

(11) **EP 2 643 414 B1**
(45) Veröffentlichungstag und Bekanntmachung des Hinweises auf die Patenterteilung: **07.11.2018**
(21) Anmeldenummer: 11787844.7
(22) Anmeldetag: 21.11.2011
(51) Int. Cl.: C09C 1/30, C09C 1/56, C09C 3/10, B60C 1/00, B29B 7/74, C08F 236/06, C08K 3/36, C08K 9/06

(54) **VERFAHREN ZUR HERSTELLUNG VON POLYMER-FUNKTIONALISIERTEN KIESELSÄUREPARTIKEL**
PROCESS FOR PRODUCING POLYMER-FUNCTIONALIZED SILICA PARTICLES
PROCÉDÉ DE PRÉPARATION DE PARTICULES DE SILICE À FONCTIONNALITÉ POLYMÈRE

(30) Priorität: 24.11.2010 DE 102010060780
(43) Veröffentlichungstag der Anmeldung: 02.10.2013
(60) Teilanmeldung: 17170135.2
(73) Patentinhaber: Continental Reifen Deutschland GmbH, 30165 Hannover (DE)
(72) Erfinder: RECKER, Carla, 30167 Hannover (DE); HERZOG, Katharina, 31177 Harsum (DE); MÜLLER, Lena, 31604 Raddestorf (DE); VANA, Philipp, 37547 Kreiensen (DE); SPRINGER, Björn, 37075 Göttingen (DE)
(74) Vertreter: Preusser, Andrea
(86) Internationale Anmeldenummer: PCT/EP2011/070538
(87) Internationale Veröffentlichungsnummer: WO 2012/069403

(56) Entgegenhaltungen:
- EP-A2- 0 272 127
- US-A1- 2010 261 808
- US-B1- 6 998 452
- LI C ET AL: "SYNTHESIS OF WELL-DEFINED POLYMER BRUSHES GRAFTED ONTO SILICA NANOPARTICLES VIA SURFACE REVERSIBLE ADDITION-FRAGMENTATION CHAIN TRANSFER POLYMERIZATION", MACROMOLECULES, AMERICAN CHEMICAL SOCIETY, WASHINGTON, DC; US, Bd. 38, Nr. 14, 12. Juli 2005 (2005-07-12) , Seiten 5929-5936, XP001234842, ISSN: 0024-9297, DOI: 10.1021/MA050216R
- ROTZOLL R; VANA P: "Synthesis of poly(methyl acrylate) loops grafted onto silica nanoparticles via reversible addition-fragmentation chain transfer polymerization", J. POLYM. SCI. A, Bd. 46, Nr. 23, 1. Dezember 2008 (2008-12-01), Seiten 7656-7666, XP002670004,
- YU LI ET AL: "Functionalization of silica nanoparticles via the combination of surface-initiated RAFT polymerization and click reactions", MACROMOLECULES, AMERICAN CHEMICAL SOCIETY, WASHINGTON, DC; US, Bd. 41, Nr. 21, 11. November 2008 (2008-11-11), Seiten 7986-7992, XP001517653, ISSN: 0024-9297, DOI: 10.1021/MA801551Z
- YANG Q; WANG L; XIANG W; ZHOU J; TAN Q H: "A temperature-responsive carbon black nanoparticle prepared by surface-induced reversible addition-fragmentation chain transfer polymerization", POLYMER, Bd. 48, 4. Juni 2007 (2007-06-04), Seiten 3444-3451, XP002677230, in der Anmeldung erwähnt

## Beschreibung

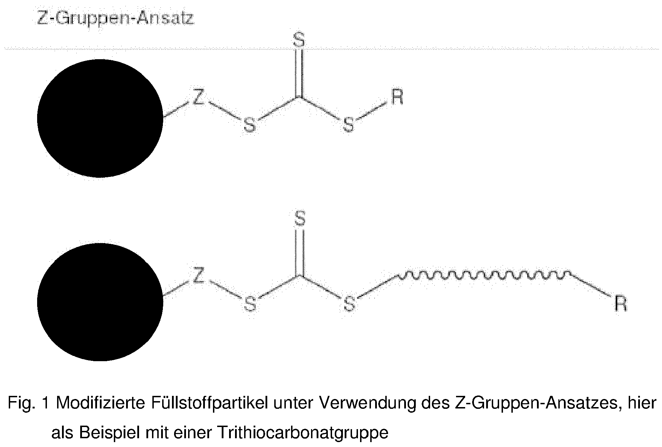

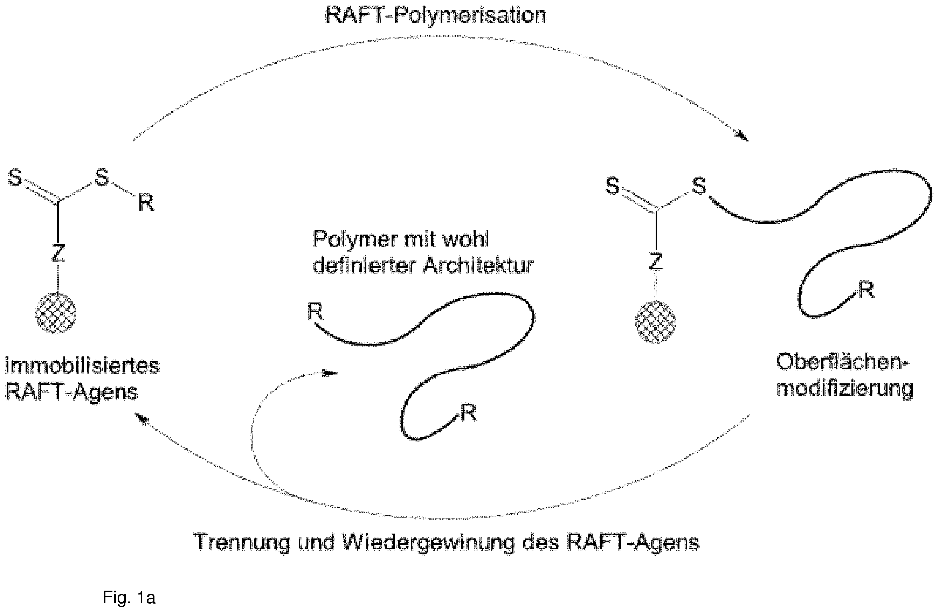

Die Erfindung betrifft ein Verfahren zur Herstellung von polymer-funktionalisierten Kieselsäurepartikeln, die nach dem Verfahren hergestellten polymer-funktionalisierten Kieselsäurepartikel und deren Verwendung in Kautschukmischungen.
Die physikalischen Eigenschaften von anorganisch-organischen Hybridmaterialien hängen in erheblicher Weise von der Stärke sowie der Struktur und den Eigenschaften der Grenzfläche zwischen den enthaltenen Komponenten ab. Zur Verstärkung der Wechselwirkung zwischen polymerer und Füllstoffphase erfolgt zumeist der Einsatz von Kupplungsreagentien. Häufig handelt es sich dabei um funktionalisierte Alkyl-, Alkoxy- oder Halogensilane, welche befähigt sind, im Verlauf der Vulkanisation bzw. der Aushärtung des polymeren Systems eine kovalente Bindung an die Füllstoffoberfläche zu etablieren. Dieses konventionelle Verfahren ist mit dem Nachteil behaftet, dass oftmals lediglich eine geringe Kopplungsdichte erreicht wird. Auch eine gezielte Manipulation der Grenzphase zwischen polymerer Matrix und Füllstoffoberfläche ist auf diese Weise nicht oder nur begrenzt möglich.
Der "Reversible Addition Fragmentation Chain Transfer"-Prozess (RAFT) ist eine vielversprechende Methode zur Durchführung kontrolliert radikalischer Polymerisationen. Die strukturelle Anbindung des Polymeren an der Oberfläche kann durch die Wahl und den chemischen Aufbau der so genannten RAFT-Agentien gesteuert werden. Die funktionellen Zentren des RAFT-Agens verbleiben hierbei üblicherweise während der Polymerisation direkt an der Oberfläche (Z-Gruppen-Ansatz, siehe Fig. 1 und Fig la). Die sogenannten R-Gruppen verbleiben folglich am Polymer und können zur spezifischen Funktionalisierung, allerdings durch die Verwendung des RAFT-Agens strukturell eingeschränkt, führen.

Die Anbindung der Füllstoffoberfläche erfolgt üblicherweise über kopplungsfähige Silylsubstituenten, oft als Z-Gruppe bezeichnet, (wie zum Beispiel -Si(OAlk)₃, -SiAlk(OAlk)₂ oder -SiAlk₂(OAlk)) an den entsprechenden RAFT-Agentien. Die Herstellung dieser Silan-substituierten RAFT-Agentien und die Möglichkeit der Vernetzung der einzelnen Silan-Gruppen von silanterminierten Polymerketten wird in der Offenlegungsschrift DE 10 2007 000 833 beschrieben. Allerdings war die Herstellung von silan-substituierten RAFT-Agentien der fachkundigen Person schon vorher bekannt, beispielsweise aus D.H. Nguyen, P.Vana, Polymers for Advances Technologies, 2006, 17, 625 oder aus L. Barner, T.P. Davis, M.H. Stenzel, C. Barner-Kowollik, Macromol. Rapid Commun., 2007, 28, 539.
Auch die Verankerung der RAFT-Agentien über die kopplungsfähige Silylgruppe wird in verschiedenen Veröffentlichungen beschrieben, beispielsweise in C.H. Liu, C.Y. Pan, Polymer, 2007, 48, 3679 oder in Y.L. Zhao, S. Perrier, Macromolecules, 2006, 39, 8603. Konventionelle Verfahren beinhalten die Ausstattung von Polymeren mit Endgruppen, welche sich reaktiv gegenüber der Füllstoffoberfläche verhalten und somit eine kovalente oder anders geartete Anbindung an die Füllstoffoberfläche im Verlauf des Misch- oder Vulkanisationsprozesses gestatten. In US 6,998,452 wird beispielsweise ein RAFT-ReAgens dargestellt, welches über eine mit einem kopplungsfähigen Silylsubstituenten ausgestattete Z-Gruppe verfügt. Die Z-Gruppe ist die Funktionalität, welche das radikalische Intermediat nach Addition einer Polymerkette stabilisiert. Diese Polymerisationsmethode wird als Grafting-to-Ansatz bezeichnet. Nachteil sind hierbei die geringen Pfropfdichten und eine gewisse Instabilität, da die Thiocarbonylthiogruppe des Kontrollagens in die Anbindung an den Füllstoff involviert ist. Darüber hinaus ist durch die Lokalisierung der RAFT-Gruppe an der Füllstoffoberfläche eine weitere Modifizierung des zweiten, freien Polymerendes nicht mehr möglich. Zudem gewinnen bei diesem Ansatz zunehmend sterische Hinderungen zwischen den wachsenden und den an die Oberfläche gebundenen Ketten an Einfluss, da die reaktiven Ketten zunächst durch die oberflächlichengebundene Polymerschicht diffundieren müssen, um mit der funktionellen RAFT-Gruppe zu reagieren.
Aus Q. Yang, L. Wang, W. D. Xiang, J. F. Zhou, Q. H. Tan, Polymer 2007, 48, 3444 ist die Möglichkeit der RAFT-Polymerisation von Rußpartikel bereits bekannt. Allerdings wird hier ein anderer Verankerungsmechanismus verwendet, wodurch eine starke und aufwändige Oberflächenmodifikation des Rußes von Nöten ist. Diese wird in mehreren Schritten durchgeführt und ist nur in kleineren Mengen präparativ durchführbar.
Der Erfindung liegt daher die Aufgabe zu Grunde, ein Verfahren zur Herstellung polymer-funktionalisierter Kieselsäurepartikel und polymer-funktionalisierte Kieselsäurepartikel hergestellt nach dem Verfahren bereitzustellen, wodurch sich Vorteile, insbesondere hinsichtlich
- höherer Pfropfdichte;
- verbesserter chemischer Stabilität;
- nachträglicher Modifizierbarkeit und
- gezielter Beeinflussung der Grenzschicht zwischen fester Phase und polymerer Matrix ergeben und so die oben genannten Nachteile verhindert werden können. Beim Einmischen der erfindungsgemäßen polymer-funktionalisierten Kieselsäurepartikel in eine Kautschukmischung sollen nach der Vernetzung eine Verbesserung der Füllstoff-Polymer-Interaktion und dadurch bedingt deutlich optimierte Mischungseigenschaften erkennbar sein.
Gelöst wird diese Aufgabe durch ein Verfahren zur Herstellung polymer-funktionalisierter Füllstoffpartikel und durch polymer-funktionalisierte Füllstoffpartikel hergestellt nach dem Verfahren, wobei das Verfahren durch wenigstens folgende Verfahrensschritte gekennzeichnet ist:
- Anbindung eines Kontrollagens zur kontrollierten radikalischen Polymerisation, enthaltend wenigstens eine kopplungsfähige Gruppe -Si(OAlk)₃,-SiAlk(OAlk)₂ oder -SiAlk₂(OAlk) mit Alk als divalenter Kohlenstoff mit 1 bis 18 C-Atomen, zur kontrollierten radikalischen Polymerisation an die Oberfläche eines Füllstoffpartikels, wobei die Gruppe R des RAFT-Agens über eine Gruppe R1 an die Oberfläche eines Füllstoffpartikels angebunden ist, wobei R1 wenigstens eine Gruppe -Si(OAlk)₃, -SiAlk(OAlk)₂ oder-SiAlk₂(OAlk) mit Alk als divalenter Kohlenstoff mit 1 bis 18 C-Atomen, ist, und wobei es sich bei den Füllstoffpartikeln um Kieselsäurepartikel handelt, und
- anschließende kontrollierte radikalische Polymerisation von Monomeren mit Hilfe des Kontrollagens, welches an dem Füllstoffpartikel gebunden ist, wobei wenigstens eines der Monomere ein Dien-Monomer ist.

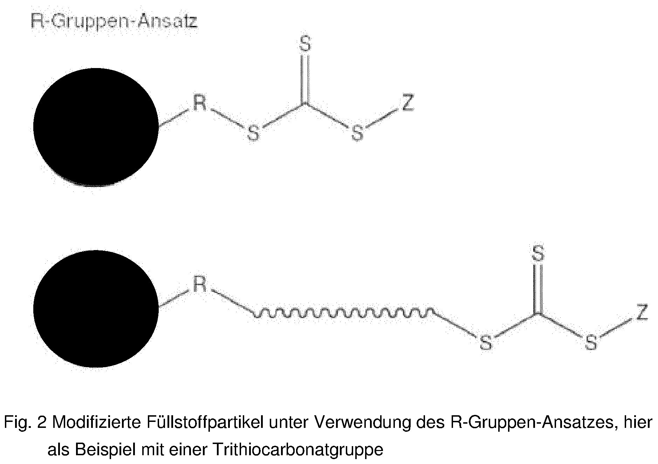

Die Anbindung von Silyl-tragenden RAFT-Agentien erfolgt gemäß dem obigen Verfahren folglich über die R-Gruppe und die anschließende RAFT-Polymerisation erfolgt somit von der festen Füllstoffoberfläche aus. Der Begriff RAFT-Agens wird in dieser Schrift synonym zu dem Begriff "Kontrollagens für die kontrollierte radikalische Polymerisation" verwendet.
Bei der kopplungsfähigen Silylgruppe handelt es sich um -Si(OAlk)₃, -SiAlk(OAlk)₂ oder -SiAlk₂(OAlk) mit Alk als divalentem Kohlenstoff mit 1 bis 18 C-Atomen.
Überraschenderweise wurde gefunden, dass die Etablierung der kopplungsfähigen Silylgruppe an die abgangsfähige R-Gruppe des RAFT-Agens (R-Gruppen-Ansatz, siehe Fig.2) folgende Vorteile hat:
Das reaktive Zentrum für die Addition wachsender Makroradikale entfernt sich im Laufe der Polymerisation von der Oberfläche. Dies impliziert in Relation zur Verankerung über die Z-Gruppe eine verminderte sterische Hinderung zwischen wachsenden und an der Oberfläche verankerten Ketten und somit einen höheren Belegungsgrad. Dies ist vor allem für schwierig zu kontrollierende Monomere wie 1,3-Diene von Bedeutung.
Nach Abschluss der kontrolliert radikalischen Polymerisation befindet sich die funktionelle Gruppe des RAFT-Agens am freien Kettenende, welches nicht auf der Füllstoffoberfläche verankert ist. Dies eröffnet Wege zur nachträglichen Modifikation des funktionalisierten Füllstoffs.
Die Tatsache, dass die Verankerung des Polymers im Gegensatz zum Z-Gruppen-Ansatz nicht über die RAFT-Gruppe erfolgt, impliziert zudem eine erhöhte Stabilität des Endproduktes.
Die Verankerung des RAFT-Agens auf der Kieselsäureoberfläche erfolgt quantitativ und kann somit über die Einwaagen gesteuert werden. Dadurch können modifizierte bzw. funktionalisierte Füllstoff-Partikel mit unterschiedlichsten Beladungsdichten hergestellt werden, welche die genannten Vorteile aufweisen.

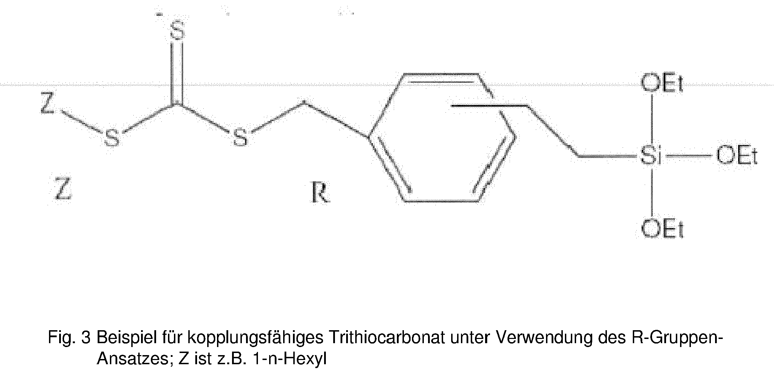

Als RAFT-Agentien können alle der fachkundigen Person bekannten RAFT-Agentien verwendet werden. Insbesondere RAFT-Agentien aus der Gruppe der Dithioester, der Dithiobenzoate, wie bspw. Cumyldithiobenzoate (CDB), der Trithiocarbonate, der Dithiocarbamate, wie bspw. 1-Phenylethyl-9H-carbazol-9-dithiocarbamat (BCC), und der Xanthogenate (auch als Xanthate bezeichnet) haben sich als vorteilhaft erwiesen.
Als besonders bevorzugtes RAFT-Agens wird die Klasse der Trithiocarbonate (=Salze der Trithiokohlensäure) gewählt, da diese leicht zu synthetisieren sind und selbst bei Zerstörung der RAFT-Gruppe ein Thiol als funktionelle Gruppe erhalten bleibt (siehe auch Fig.3). Hierbei sind Propyl-(phenylmethyl)-trithiocarbonat (PPT) und Propyl-((trimethoxysilan)ethyl-phenylmethyl)-trithiocarbonat (PPTS) und 1,6-Hexyl-di((trimethoxysilanethyl-phenylmethyl)-trithiocarbonat (HDPS) und Bis(1-phenylethyl)trithiocarbonat (BPETC) besonders zu erwähnen.
Im Folgenden wird die Herstellung einzelner bevorzugter RAFT-Agentien dargestellt:

### Herstellung von Propyl-((trimethoxysilan)ethyl-phenylmethyl)-trithiocarbonat (PPTS) als RAFT-Agens für RAFT-Polymerisation an Kieselsäure-Oberflächen

In einer typischen Umsetzung erfolgt die tropfenweise Zugabe von Propanthiol (6,85 g; 0,09 mol) zu einer eisgekühlten Lösung aus Methanol (30 ml) und einer 25%ige Lösung von Natriummethanolat (19,65 g; 0,09 mol) in Methanol. Die Reaktionslösung wird zwei Stunden bei Raumtemperatur gerührt. Anschließend erfolgt die tropfenweise Zugabe von Schwefelkohlenstoff (6,85 g; 0,09mol) und die Reaktionslösung wird dann für vier Stunden bei Raumtemperatur gerührt. Danach erfolgt die Zugabe von ((Chloromethyl)phenyl)trimethoxysilan (25,00 g; 0,09 mol) und die Reaktionslösung wird bei Raumtemperatur für 12 Stunden gerührt. Anschließend wird das Lösungsmittel im Vakuum entfernt und die Restmenge in Chloroform (60 ml) aufgenommen. Die organische Phase wird mit Wasser (30 ml) gewaschen und anschließend über Magnesiumsulfat getrocknet. Das Lösungsmittel wird im Hochvakuum entfernt und man das gewünschte Produkt als gelbliches Öl (26,32 g) in einer Ausbeute von 75% erhalten.

### Herstellung von 1,6-Hexyl-di((trimethoxysilanethyl-phenylmethyl)-trithiocarbonat (HDPS) als RAFT-Agens für RAFT-Polymerisation an Kieselsäure-Oberflächen

Die synthetische Prozedur ist analog zu der Reaktionsvorschrift von Propyl-((trimethoxysilan)ethyl-phenylmethyl)-trithiocarbonat (PPTS), außer das anstatt Propanthiol 1,6-Hexandithiol (6,83 g; 0,046 mol) eingesetzt wird.

Um die Polymerisationskontrolle bei der RAFT-Polymerisation an Kieselsäure-Oberflächen zu erhöhen, können zusätzlich noch ungebunden RAFT-Agentien zugesetzt werden.

### Herstellung Bis(1-phenylethyl)trithiocarbonat (BPETC) (nicht erfindungsgemäß)

Ein Gemisch aus Schwefelkohlenstoff (1,90 g; 0,025 mol) und Caesiumcarbonat (8,14 g; 0,025 mol) in *N,N*-Dimethylacetamid (20 ml) wird für 20 Minuten bei Raumtemperatur gerührt. Es kommt zu einer intensiven Rotfärbung der Reaktionsmischung.

Es erfolgt die langsame Zugabe von 1-Bromo-ethylbenzol (4,62 g; 0,025 mol) in *N,N-*Dimethylacetamid (5 ml). Die Reaktionslösung wird für 24 Stunden bei Raumtemperatur gerührt und danach in Eiswasser (150 ml) überführt. Die wässrige Phase wird mit Essigester (3 mal 50 ml) extrahiert. Die vereinigten organischen Phasen werden über Natriumsulfat getrocknet und das Lösungsmittel im Hochvakuum entfernt. Das gewünschte Produkt wird als gelbliches Öl (7,79 g) in einer Ausbeute von 98% erhalten.

### Herstellung von Propyl-(phenylmethyl)-trithiocarbonat (PPT) (nicht erfindungsgemäß)

Zu einer Lösung von Propanthiol (3,00 g; 0,039 mol) in Chloroform (200 ml) erfolgt die langsame Zugabe von Triethylamin (4,78 g; 0,047 mol). Das Reaktionsgemisch wird für eine Stunde bei Raumtemperatur gerührt. Anschließend erfolgt die Zugabe von Schwefelkohlenstoff (7,50; 0,098 mol) und das Reaktionsgemisch wird für weitere zwei Stunden bei Raumtemperatur gerührt. Danach erfolgt die Zugabe von Benzylbromid (8,08 g; 0,047 mol) und die Reaktionslösung wird für 24 Stunden bei Raumtemperatur gerührt. Es erfolgt die Zugabe von 10%iger Salzsäure (200 ml). Die organische Phase wird abgetrennt und mit Wasser gewaschen (3 mal 100 ml). Die vereinigten organischen Phasen werden über Natriumsulfat getrocknet und das Lösungsmittel im Hochvakuum entfernt. Das gewünschte Produkt wird als gelbliches Öl (9,36 g) in einer Ausbeute von 98% erhalten.

### Herstellung von Furfuryl-2-bromopropionat (nicht erfindungsgemäß)

Zu einer eisgekühlten Lösung von 2-Furylmethanol (5,10 g; 0,052 mol) in 70 ml Chloroform wird Triethylamin (5,26 g; 0,052 mol) hinzugegeben. Danach erfolgt die langsame Zugabe von 2-Bromopropionylbromid (9,93 g; 0,046 mol) in 10 ml Chloroform. Die Reaktionsmischung wird für 24 h bei RT gerührt. Zur Aufarbeitung wird das Reaktionsgemisch mit Wasser (1 mal 80 ml), 10 %iger Schwefelsäure (1 mal 80 ml) und mit gesättigter NaHCO₃-Lsg. (2 mal 50 ml) gewaschen. Die organische Phase wird über Magnesiumsulfat getrocknet, eingeengt und im Hochvakuum getrocknet. Die Ausbeute beträgt 67%.

### Herstellung von Furfuryl-2-bromopropanthioat (nicht erfindungsgemäß)

Die synthetische Prozedur ist analog zu der Reaktionsvorschrift von Furfuryl-2-bromopropionat, außer das anstatt 2-Furylmethanol 2-Furuylmethanthiol (5,94 g, 0,052 mol) verwendet wird.

### Herstellung von Natrium-(propyl)-trithiocarbonat (nicht erfindungsgemäß)

Zu einer eisgekühlten Lösung von Propanthiol (4,00 g; 0,053 mol) in 50 ml Tetrahydrofuran erfolgt die Zugabe von 50 %iger Natriumhydroxidlösung. Danach erfolgt die langsame Zugabe von CS₂ (4,00 g; 0,053 mol). Dabei ist darauf zu achten, dass die Temperatur 10 °C nicht übersteigt. Die Reaktionsmischung wird für 24 h bei Raumtemperatur gerührt und aus Hexan umkristallisiert. Die Ausbeute beträgt 64 %.

### Herstellung von Propyl-(Furfurylpropanioat)-trithiocarbonat (nicht erfindungsgemäß)

Zu einer Lösung von Furfuryl-2-bromopropionat (1,49 g; 0,0064 mol) in DMSO (25 ml) wird eine Lösung von Natrium-(propyl)-trithiocarbonat (1,12 g; 0,0064 mol) in 10 ml DMSO hinzugegeben. Das Reaktionsgemisch wird bei RT für 48 h gerührt und danach mit Diethylether (3 mal 20 ml) gewaschen. Die vereinigten organischen Phasen werden mit Wasser gewaschen und über Natriumsulfat getrocknet. Das Lösungsmittel wird im Hochvakuum verdampft und das Produkt wird mit einer Ausbeute von 72 % erhalten.

Die Anbindung des RAFT-Agens, welches wenigstens eine kopplungsfähige Silylgruppe S enthält, an die Füllstoffoberfläche erfolgt über die Gruppe R, wobei R = -Si(OAlk)₃, -SiAlk(OAlk)₂ oder -SiAlk₂(OAlk) ist mit Alk als divalentem Kohlenwasserstoff mit 1 bis 18 C-Atomen, wenn der Füllstoff Kieselsäure ist.

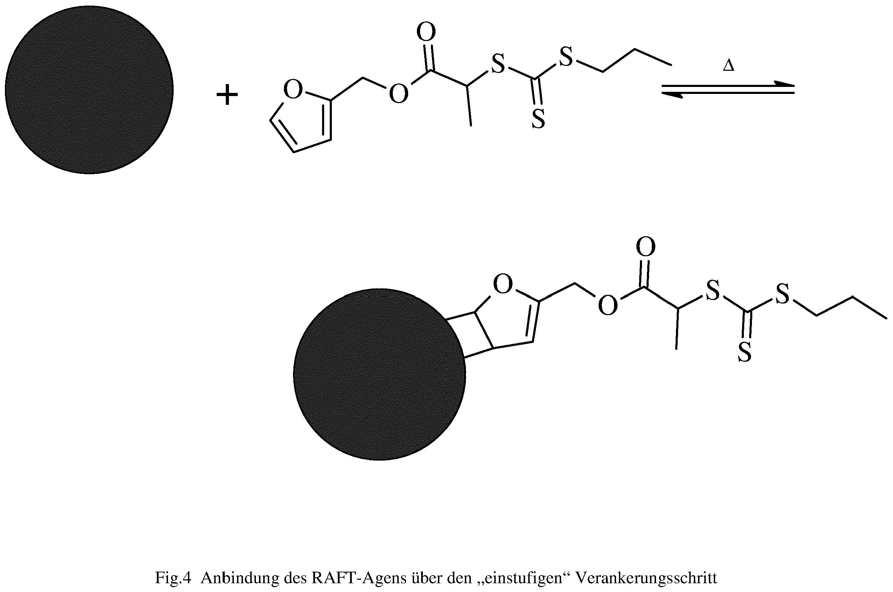

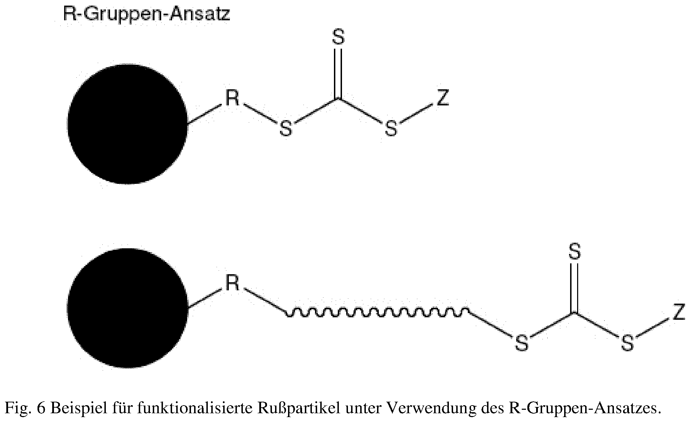

Die Anbindung des RAFT-Agens an die Oberfläche der Füllstoffpartikel erfolgt dabei über eine Diels-Alder-Reaktion, wenn der Füllstoff Ruß ist (siehe Fig. 4, 5 und 6) (nicht erfindungsgemäß)

Die Verankerung unter Ausnutzung der Diels-Alder-Reaktion und der strukturelle Aufbau des RAFT-Agens implizieren folgende Vorteile:
1) Die Anbindung erfolgt ohne die Bildung von Nebenprodukten und kann unter milden Reaktionsbedingungen durchgeführt werden.
2) Es werden keine weiteren Zusätze benötigt (auch nicht in katalytischen Mengen).
3)Die Immobilisierung kann in einer ein- bzw. zweistufigen Synthesestrategie durchgeführt werden. Es ist auch möglich, dass die Immobilisierung über eine Steglich-Veresterung erfolgt.
4) Die Immobilisierung erfolgt nicht quantitativ. Allerdings kann die Beladungsdichte über die Reaktionsdauer und die Temperatur gesteuert werden und ggf. mittels Elementaranalyse überprüft werden.
5) Aufgrund des strukturellen Aufbaus des RAFT-Agens kann nach Beendigung der Polymerisation die Polymerkette an der Ester- bzw. Thioesterbindung abgespalten werden, um eine Analyse hinsichtlich Molekulargewicht und Molekulargewichtsverteilung zu ermöglichen.

Die Immobilisierung erfolgt über die R-Gruppe, womit sich folgende Vorteile ergeben:
1) Das reaktive Zentrum für die Addition wachsender Makroradikale entfernt sich im Laufe der Polymerisation von der Oberfläche. Dies impliziert in Relation zur Verankerung über die Z-Gruppe eine verminderte sterische Hinderung zwischen wachsenden und an der Oberfläche verankerten Ketten. Somit kann ein höherer Belegungsgrad realisiert werden.
2) Nach Abschluss der kontrolliert radikalischen Polymerisation befindet sich die funktionelle Gruppe des RAFT-Agens am freien Kettenende, welches nicht auf der Füllstoffoberfläche verankert ist. Dies eröffnet Wege zur nachträglichen Modifikation des Kettenendes.
3) Die Etablierung der funktionellen RAFT-Gruppe am Polymerkettenende impliziert einen gewissen Anteil von Schwefelatomen, welche z.B. bei der Vulkanisation verwendet werden können.

### Herstellung von oberflächenmodifizierten Rußpartikeln in einstufiger Syntheseführung (nicht erfindungsgemäß)

Als Beispiel siehe Fig. 4.

In einer typischen Umsetzung wird Propyl-(2-Furfuryl-2-propanioat)-trithiocarbonat (1,31 g; 0,0043 mol) zu einer Suspension von Ruß (0,557 g; 0,046 mol) in 30 ml Dibenzylether gegeben und das Reaktionsgemisch für 24 Stunden bei 100°C gerührt. Danach wird der Ruß im Soxhlet mit THF für mehrere Stunden gewaschen und anschließend im Hochvakuum getrocknet.

Im Vergleich zum unbehandelten Ruß bestimmt die Elementaranalyse eine Beladungsdichte von 0,118 mmol RAFT-Agens pro Gramm Ruß.

### Herstellung von oberflächenmodifizierten Rußpartikeln in zweistufiger Syntheseführung (nicht erfindungsgemäß)

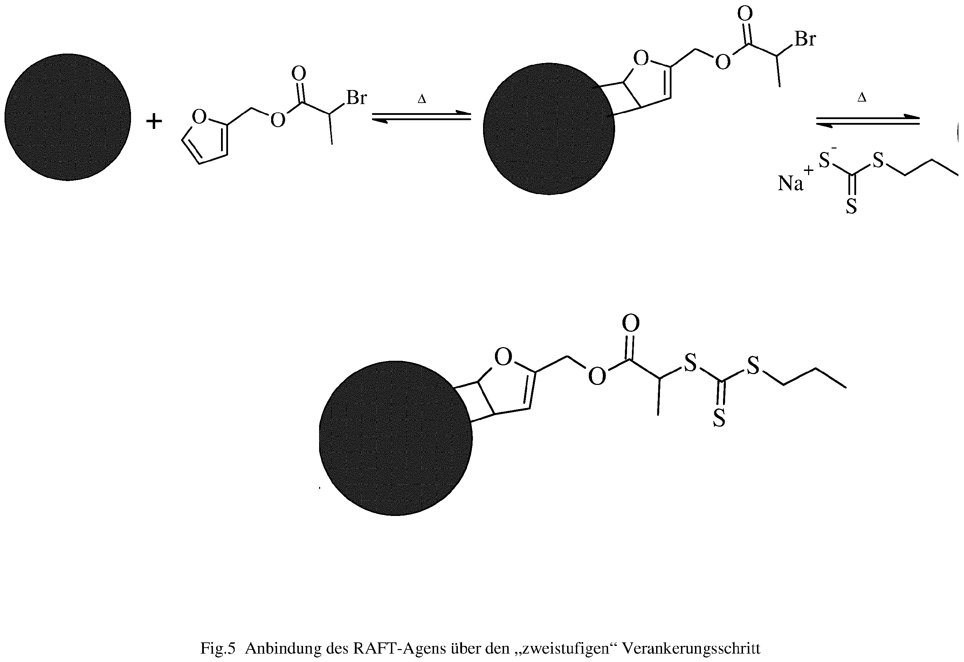

Als Beispiel siehe Fig. 5.

In einer typischen Umsetzung wird Furfuryl-2-bromopropionat (2,09 g, 0,009 mol) zu einer Suspension von Ruß (5,40 g; 0,450 mol) in 200 ml Dibenzylether getropft und das Reaktionsgemisch für 48 Stunden bei 130°C gerührt. Danach wird der Ruß im Soxhlet mit THF gewaschen und im Hochvakuum getrocknet.

Der getrocknete Ruß (5,40 g; 0,450 mol) wird in Dimethylsulfoxid suspendiert und danach mit Natrium-(propyl)-trithiocarbonat (1,71 g; 0,009 mol) versetzt. Das Reaktionsgemisch wird bei Raumtemperatur für 24 Stunden gerührt, im Soxhlet mit THF gewaschen und im Hochvakuum getrocknet.

Im Vergleich zum unbehandelten Ruß bestimmt die Elementaranalyse eine Beladungsdichte von 0,192 mmol RAFT-Agens pro Gramm Ruß.

Handelt es sich bei dem Füllstoff um Kieselsäure, so erfolgt die Anbindung mit Hilfe der Trimethoxysilangruppen.

Die Verankerung verläuft über vier Schritte. Im ersten Schritt erfolgt eine Hydrolyse der Trimethoxysilangruppen in Gegenwart von Wasser zum entsprechenden Silanol. Diese Silanole kondensieren im zweiten Reaktionsschritt zusammen und bilden Oligomere aus. Diese Oligomere bilden mit den Hydroxylgruppen der Kieselsäureoberfläche starke Wasserstoffbrückenbindungen aus. Schließlich wird eine kovalente Bindung unter Abspaltung von Wasser mit der Oberfläche des Substrates ausgebildet.

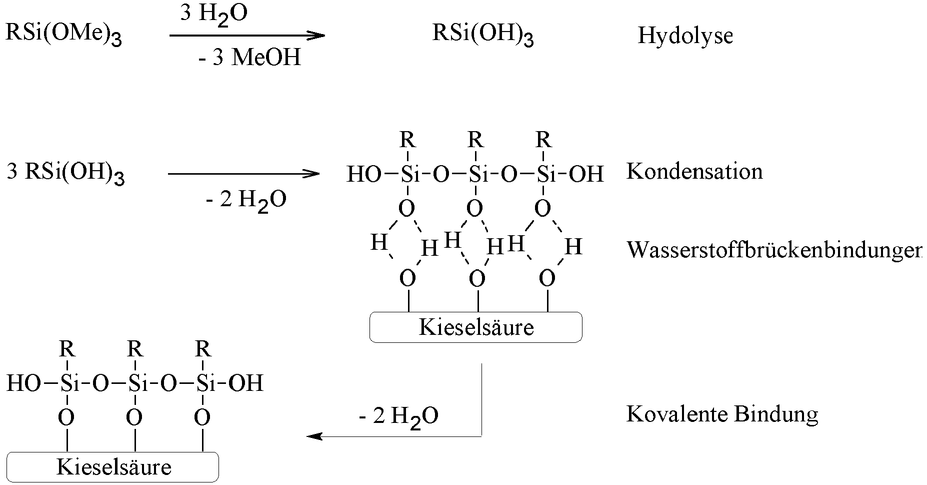

Die Beladungsdichte der Kieselsäurepartikel kann hierbei über geeignete Einwaagen gesteuert werden.

In einem typischen Experiment wird (Propyl-((trimethoxysilan)ethyl-phenylmethyl)-trithiocarbonat (0,332 g; 0,851 mmol) tropfenweise zu einer stark gerührten Suspension von Kieselsäure (17,75 g) in Toluol (350 ml) gegeben. Es wird eine katalytische Menge von gesättigter Maleinsäureanhydridlösung (1 ml) zugetropft und anschließend das Reaktionsgemisch bei 60°C für 24 Stunden intensiv gerührt. Nach Beendigung der Reaktion wird die Kieselsäure im Soxhlet mit Dichlormethan für mehrere Stunden gewaschen. Die Immobilisierung erfolgt in diesem Fall quantitativ, wodurch sich die Beladungsdichte zu 0,048 mmol RAFT-Agens pro Gramm Kieselsäure berechnet.

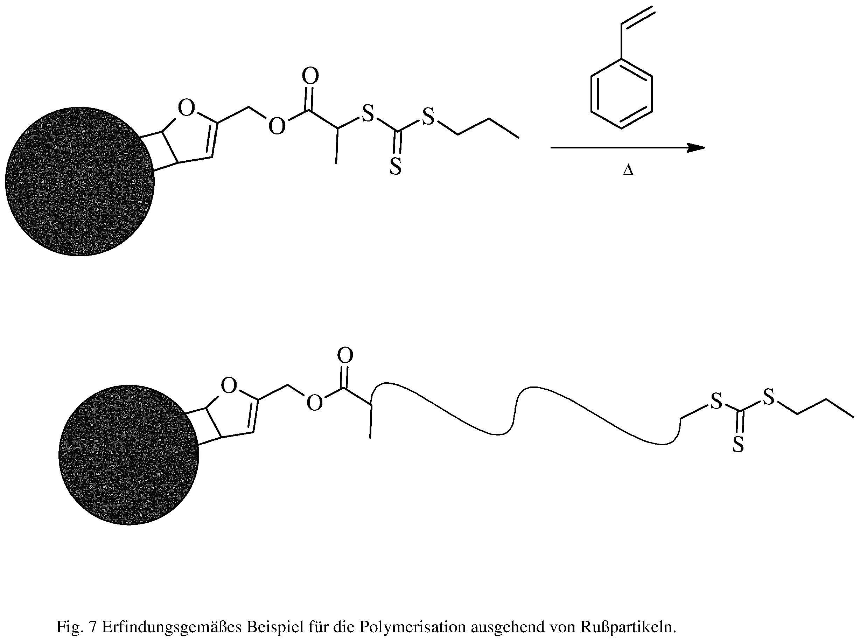

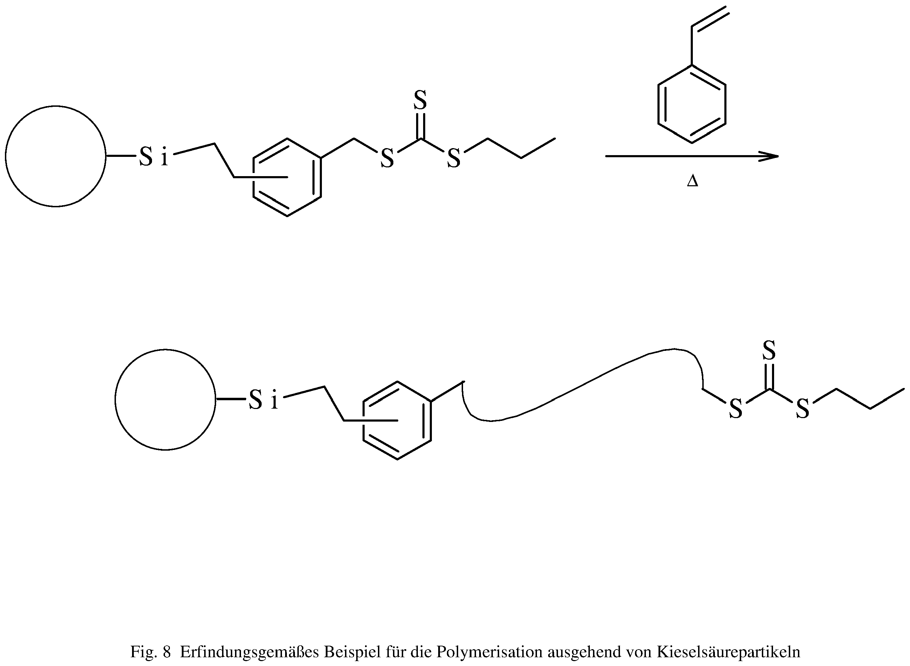

Nach der Anbindung des RAFT-Agens an die Oberfläche des Füllstoffpartikels erfolgt die kontrollierte radikalische Polymerisation von Monomeren mit Hilfe des Kontrollagens, welches an dem Füllstoffpartikel gebunden ist. Die Polymerisation erfolgt somit direkt von der Oberfläche des Füllstoffpartikels weg. Die funktionellen Gruppen des RAFT-Agens befinden sich dabei am freien Polymerkettenende und bewegen sich von der Oberfläche weg, siehe Fig.7 und 8. Dadurch ergeben sich die bereits oben genannten Vorteile.

Als Monomere können alle radikalisch polymerisierbaren Monomere einzeln oder in Kombination verwendet werden, so dass sich nach Abschluss der Polymerisation ein Homopolymer oder ein Copolymer oder ein Blockpolymer oder ein Blockcopolymer ergibt, wobei wenigstens eines der Monomere ein Dien-Monomer ist. Vorzugsweise handelt es sich hierbei um 1,2-Butadien, 1,3-Butadien, Isopren, Styrol, Acrylnitril, 2-Propennitril, Vinylverbindungen, Methacrylverbindungen, Acrylverbindungen und so genannte "En"-Verbindungen, wie bspw. Norbornene. Als besonders geeignet haben sich Dien-Monomere und hier bevorzugt Butadien-Monomere zur Ausbildung von Polybutadien oder Butadien-Copolymeren erwiesen.

Eine weitere Aufgabe der vorliegenden Erfindung ist es, Kautschukmischungen bereitzustellen, welche sich durch eine verbesserte Polymer-Füllstoff-Anbindung und eine verbesserte Dispersion des Füllstoffs in der Kautschukmischung auszeichnen. Dadurch bedingt zeigen sich optimierte physikalische Eigenschaften der Kautschukmischung.

Gelöst wird diese Aufgabe dadurch, dass die Kautschukmischung polymer-funktionalisierte Füllstoffpartikel, welche nach dem erfindungsgemäßen Verfahren hergestellt wurden, enthält.

Durch die bereits oben genannten Eigenschaften der polymer-funktionalisierten Füllstoffpartikel ergeben sich optimierte physikalische Eigenschaften der Kautschukmischung

Die Kautschukmischung kann für die Herstellung von Reifen, insbesondere Pkw-Reifen, LKW-Reifen, Zweiradreifen oder Industriereifen, welche auch als Vollgummireifen ausgeprägt sein können, verwendet werden. Bevorzugt wird die erfindungsgemäße Kautschukmischung als Laufstreifen eingesetzt, aber auch die Verwendung als Kautschukmischung für die inneren Bauteile (body compounds) ist möglich. Des Weiteren kann die Kautschukmischung zur Herstellung von technischen Gummiartikeln, wie beispielsweise Gurte, Riemen, Schläuche, Dichtungen, Luftfederbälgen und Drucktüchern verwendet werden.

Die Kautschukmischung kann zusätzlich, neben dem bereits aus den polymermodifizierten Füllstoffpartikeln vorhandenen Kautschuk, zumindest einen weiteren polaren oder unpolaren Kautschuk enthalten.

Der polare oder unpolare Kautschuk ist dabei ausgewählt aus der Gruppe, bestehend aus natürlichem Polyisopren und / oder synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder hydrierter Styrolbutadienkautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Die Kautschukmischung enthält des Weiteren die erfindungemäßen polymer-funktionalisierten Füllstoffpartikel.

Die Kautschukmischung enthält 1 bis 300 phr, bevorzugt 1 -bis 250 phr, besonders bevorzugt 1 bis 200 phr, wiederum besonders bevorzugt 1 bis150 phr, wiederum ganz besonders bevorzugt 1 bis 100 phr, polymer-funktionalisierte Kieselsäurepartikel.

Die Kautschukmischung kann zusätzlich noch polymer-funktionalisierte Rußpartikel enthalten.

Weitere, in der Kautschukindustrie bekannte Füllstoffe, wie Aluminiumoxid, Talk, Kaolin, Karbonate, Metalloxide (bspw. Mg-Oxide, Fe-Oxide, Ti-Oxide), Glimmer, Kohlenstofffasern, Tonminerale, modifizierte Schichtsilikate und weitere sind möglich. Ebenso können noch Fasern, z. Bsp. aus Aramid oder Nylon, Mikrohohlkugeln, oder Glasflocken in der Kautschukmischung enthalten sein.

Weiterhin enthält die Kautschukmischung noch weitere Zusatzstoffe.

Weitere Zusatzstoffe beinhaltet im Wesentlichen Weichmacher, Zinkoxid, das Vernetzungssystem (Vernetzer, Schwefelspendern und / oder elementaren Schwefel, Beschleuniger und Verzögerer), Ozonschutzmittel, Alterungsschutzmittel, Mastikationshilfsmittel und weitere Aktivatoren bzw. Verarbeitungshilfsmittel.

Der Mengenanteil der Gesamtmenge an weiteren Zusatzstoffen beträgt 3 bis 150 phr, bevorzugt 3 bis 100 phr und besonders bevorzugt 5 bis 80 phr.

Als Weichmacher werden bevorzugt Mineralöle, wie beispielsweise DAE (Destillated Aromatic Extracts), RAE (Residual Aromatic Extract), TDAE (Treated Destillated Aromatic Extracts), MES (Mild Extracted Solvents) und / oder naphtenische Öle und /oder synthetische Weichmacher und / oder Fettsäuren und / oder ein Fettsäurederivate und / oder ein Harze und / oder ein Faktisse und / oder Pflanzenöle oder BTL-Öle (Biomass- To-Liquid) und / oder Flüssigpolymere eingesetzt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Erfindung soll nun anhand von Vergleichs- und Ausführungsbeispielen, die in Tabellen 1 und 2 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

In Tabelle 1 ist der Aufbau der polymer-funktionalisierten Füllstoffpartikel beschrieben, während Tabelle 2 im oberen Teil die Mischungszusammensetzung und in unteren Teil die physikalischen Eigenschaften der Mischung illustriert sind.

Die Mischungsherstellung erfolgte unter üblichen Bedingungen in mehreren Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Rückprallelastizität bei Raumtemperatur und 70°C gemäß DIN 53 512
- Shore-A-Härte bei Raumtemperatur und 70°C gemäß DIN 53 505
- Spannungswert (Modul) bei 100% und 200% Dehnung bei Raumtemperatur gemäß DIN 53 504
- Bruchdehnung bei Raumtemperatur gemäß DIN 53 504
- Zugfestigkeit bei Raumtemperatur gemäß DIN 53 504
- dynamischer Speichermodul E' bei -25 °C gemäß DIN 53 513 bei 8% Dehnung

**Tabelle 1**

| | **Styrolbutadien (SBR)** | | **Kieselsäure** (Z1165, Fa. Rhodia) | |
|---|---|---|---|---|
| | Styrol Gew.-% | Vinyl Gew.-% | phr | |
| **MB1** | 23 | 18 | 40 | Polymer nicht angebunden an Kieselsäure über Katalysator |
| **MB2** | 22 | 16 | 40 | Polymer angebunden an Kieselsäure über Katalysator |
| **MB3** | 23 | 17 | 40 | Polymer angebunden an Kieselsäure über Katalysator mit Styrolblock zwischen Kieselsäure und SBR |
| **MB4** | 23 | 18 | 40 | Polymer angebunden an Kieselsäure über Katalysator mit Butadienblock zwischen Kieselsäure und SBR |

**Tabelle 2**

| **Zusammensetzung** | **Einheit** | **V1** | **E1** | **E2** | **E3** |
|---|---|---|---|---|---|
| NR | phr | 10 | 10 | 10 | 10 |
| MB1 | phr | 126 | -- | -- | -- |
| MB2 | phr | -- | 126 | -- | -- |
| MB3 | phr | -- | -- | 126 | -- |
| MB4 | phr | -- | -- | -- | 126 |
| Mineralöl, TDAE | phr | 5 | 5 | 5 | 5 |
| 6PPD, Ozonschutz, Stearinsäure | phr | 6,5 | 6,5 | 6,5 | 6,5 |
| ZnO | phr | 2,5 | 2,5 | 2,5 | 2,5 |
| DPG, CBS | phr | 4 | 4 | 4 | 4 |
| Schwefel | phr | 2 | 2 | 2 | 2 |

| Eigenschaften | | | | | |
|---|---|---|---|---|---|
| Härte bei RT | ShoreA | 62,1 | 61,8 | 58,5 | 60,9 |
| Härte bei 70°C | ShoreA | 58,5 | 58,3 | 55,1 | 55,6 |
| Rückprall bei RT | % | 36,2 | 35,8 | 33,2 | 36,4 |
| Rückprall bei 70°C | % | 44,0 | 47,0 | 47,8 | 47,8 |
| delta * Rückprall | | 3,08 | 2,41 | 2,32 | 2,49 |
| Zugfestigkeit | MPa | 9,63 | 8,11 | 8,85 | 8,1 |
| Bruchdehnung | % | 319 | 304 | 289 | 304 |
| Modul 100% | MPa | 2,13 | 2,04 | 2,18 | 1,99 |
| Modul 200% | MPa | 5,53 | 5,63 | 5,81 | 5,01 |
| E'(-25°C)** | MPa | 57,67 | 56,98 | 67,8 | 51,9 |

| | | | | | |
|---|---|---|---|---|---|
| *delta: Verlustwinkel aus der Vulkameterkurve bei t100, je kleiner delta, umso besser ist das Rollwiderstandsverhalten **aus dem Eplexor-Temperatursweep, je kleiner die Steifigkeit bei tieferen Temperaturen, umso besser ist die Kälteflexibilität und damit die Wintereigenschaften | | | | | |

## Patentansprüche

1. Verfahren zur Herstellung polymer-funktionalisierter Füllstoffpartikel, **gekennzeichnet durch** wenigstens folgende Verfahrensschritte:
- Anbindung eines Kontrollagens zur kontrollierten radikalischen Polymerisation, enthaltend wenigstens eine kopplungsfähige Gruppe -Si(OAlk)₃, -SiAlk(OAlk)₂ oder -SiAlk₂(OAlk) mit Alk als divalenter Kohlenstoff mit 1 bis 18 C-Atomen, an die Oberfläche eines Füllstoffpartikels, wobei die Gruppe R des RAFT-Agens über eine Gruppe R1 an die Oberfläche eines Füllstoffpartikels angebunden ist, wobei R1 wenigstens eine Gruppe -Si(OAlk)₃, -SiAlk(OAlk)₂ oder -SiAlk₂(OAlk) mit Alk als divalenter Kohlenstoff mit 1 bis 18 C-Atomen, ist, und wobei es sich bei den Füllstoffpartikeln um Kieselsäurepartikel handelt, und
- anschließende kontrollierte radikalische Polymerisation von Monomeren mit Hilfe des Kontrollagens, welches an dem Füllstoffpartikel gebunden ist, wobei wenigstens eines der Monomere ein Dien-Monomer ist.

2. Verfahren nach Anspruch 1 **dadurch gekennzeichnet, dass** das Kontrollagens zur kontrolliert radikalischen Polymerisation ausgewählt ist aus der Gruppe der Trithiocarbonate.

3. Polymer-funktionalisierte Füllstoffpartikel hergestellt nach dem Verfahren nach einem der Ansprüche 1 bis 2.

4. Kautschukmischung, **dadurch gekennzeichnet, dass** sie polymer-funktionalisierte Füllstoffpartikel nach Anspruch 3 enthält.

5. Verwendung einer Kautschukmischung nach Anspruch 4 zur Herstellung eines Reifens

6. Verwendung einer Kautschukmischung nach Anspruch 5 zur Herstellung des Laufstreifens oder einer Body-Mischung eines Reifens.

7. Verwendung einer Kautschukmischung nach Anspruch 4 zur Herstellung eines Gurtes, Riemens oder Schlauches.

## Claims

1. Process for producing polymer-functionalized filler particles, **characterized by** the following steps at least:
- binding a control agent for controlled free-radical polymerization, containing a coupleable -Si(OAlk)₃, -SiAlk(OAlk)₂ or -SiAlk₂(OAlk) group where Alk is divalent carbon having 1 to 18 carbon atoms at least, to the surface of a filler particle, wherein the R group of the RAFT agent becomes bound to the surface of a filler particle via an R1 group, wherein R1 is at least one -Si(OAlk)₃, -SiAlk(OAlk)₂ or - SiAlk₂(OAlk) group where Alk is divalent carbon having 1 to 18 caarbon atoms, and wherein the filler particles are silica particles, and
- then performing a controlled free-radical polymerization of monomers using the control agent bound to the filler particle, wherein at least one of the monomers is a diene monomer.

2. Process according to Claim 1, **characterized in that** the control agent for controlled free-radical polymerization is selected from the group of trithiocarbonates.

3. Polymer-functionalized filler particles obtained by the process according to any of Claims 1 to 2.

4. Rubber mixture **characterized in that** it contains polymer-functionalized filler particles according to Claim 3.

5. Use of a rubber mixture according to Claim 4 in the manufacture of a tire.

6. Use of a rubber mixture according to Claim 5 in the manufacture of the tread strip or of a body mixture of a tire.

7. Use of a rubber mixture according to Claim 4 in the manufacture of a belt, drivebelt or flexible tube.

## Revendications

1. Procédé de fabrication de particules de charge à fonctionnalisation polymère, **caractérisé par** au moins les étapes de procédé suivantes :
- la liaison d'un agent de contrôle pour la polymérisation radicalaire contrôlée, contenant au moins un groupe -Si(OAlk)₃, -SiAlk(OAlk)₂ ou -SiAlk₂(OAlk) apte au couplage avec Alk un carbone bivalent de 1 à 18 atomes C, sur la surface d'une particule de charge, le groupe R de l'agent RAFT étant relié par un groupe R1 sur la surface d'une particule de charge, R1 étant au moins un groupe -Si(OAlk)₃, -SiAlk(OAlk)₂ ou -SiAlk₂(OAlk) avec Alk un carbone bivalent de 1 à 18 atomes C, et les particules de charge consistant en des particules de silice, et
- la polymérisation radicalaire contrôlée de monomères à l'aide de l'agent de contrôle qui est relié à la particule de charge, au moins un des monomères étant un monomère diène.

2. Procédé selon la revendication 1, **caractérisé en ce que** l'agent de contrôle pour la polymérisation radicalaire contrôlée est choisi dans le groupe des trithiocarbonates.

3. Particules de charge à fonctionnalisation polymère fabriquées par le procédé selon l'une quelconque des revendications 1 et 2.

4. Mélange de caoutchouc, **caractérisé en ce qu'**il contient des particules de charge à fonctionnalisation polymère selon la revendication 3.

5. Utilisation d'un mélange de caoutchouc selon la revendication 4 pour la fabrication d'un pneu.

6. Utilisation d'un mélange de caoutchouc selon la revendication 5 pour la fabrication de la bande de roulement ou d'un mélange de corps d'un pneu.

7. Utilisation d'un mélange de caoutchouc selon la revendication 4 pour la fabrication d'une sangle, d'une courroie ou d'un tuyau.
